# EUROPÄISCHE PATENTSCHRIFT

(11) **EP 1 882 120 B1**
(45) Veröffentlichungstag und Bekanntmachung des Hinweises auf die Patenterteilung: **10.09.2008**
(21) Anmeldenummer: 06742822.7
(22) Anmeldetag: 06.05.2006
(51) Int. Cl.: F16H 63/36, F16H 63/38

(54) **VORRICHTUNG ZUR AUFHEBBAREN VERRIEGELUNG EINER SCHALTVORRICHTUNG FÜR EIN GETRIEBE**
MECHANISM FOR REVERSIBLY LOCKING A SHIFTING DEVICE FOR A TRANSMISSION
DISPOSITIF DE VERROUILLAGE SUSCEPTIBLE D'ETRE SUPPRIME, D'UN ELEMENT DE COUPLAGE POUR UNE TRANSMISSION

(30) Priorität: 20.05.2005 DE 102005023245
(43) Veröffentlichungstag der Anmeldung: 30.01.2008
(73) Patentinhaber: ZF FRIEDRICHSHAFEN Aktiengesellschaft, 88038 Friedrichshafen (DE)
(72) Erfinder: DRABEK, Michael, 14776 Brandenburg (DE)
(86) Internationale Anmeldenummer: PCT/EP2006/004272
(87) Internationale Veröffentlichungsnummer: WO 2006/122666

(56) Entgegenhaltungen:
- DE-U1- 8 122 318
- FR-A- 1 196 085
- FR-A- 2 780 475
- US-A- 2 350 506
- US-A- 2 953 035

## Beschreibung

Die Erfindung betrifft eine Vorrichtung zur aufhebbaren Verriegelung einer Schaltvorrichtung für ein Getriebe gemäß dem Oberbegriff des Patentanspruchs 1. Eine Solche Vorrichtung ist aus der DE 81 22 318 U1 bekannt.

Schaltgetriebe sind in vielen Fällen so aufgebaut, dass unterschiedliche Zahnradpaarungen durch Verschiebungen von Schaltstangen, Schaltgabeln oder ähnlicher Schaltelemente in wirksamen Eingriff gebracht werden können. Dies geschieht zumeist durch eine Verschiebung von Zahnrädern relativ zu den sie tragenden Wellen, wobei zwischen Zahnrad und Welle eine Kupplung geschlossen wird. Anordnungen zur relativen Verschiebung zwischen Zahnrädern und Wellen und/oder zur Betätigung der entsprechenden Kupplungen sind oft so aufgebaut, dass jedem Gang genau eine Schaltstange bzw. ein mechanisch verschiebliches Schaltelement zugeordnet ist, welches in einer ersten Stellung den Momentenfluss über die zugeordnete Zahnradpaarung aktiviert, während es in einer zweiten Stellung bzw. in allen anderen Stellungen den Momentenfluss über diese zugeordnete Zahnradpaarung nicht aktiviert.

Bei anderen Bauweisen kann eine Schaltstange bzw. ein mechanisch verschiebbares Schaltelement in unterschiedlichen Positionen alternativ unterschiedliche Zahnradpaarungen aktivieren, also je nach Stellung unterschiedliche Gänge aktivieren, wobei ebenfalls zumindest eine Stellung vorgesehen ist, in der keiner der durch dieses Schaltelement geschalteten Gänge eingelegt ist. Diese Position oder diese Positionen, in denen ein Schaltelement keinen der durch das Schaltelement schaltbaren Gänge aktiviert, wird im Folgenden als Neutralstellung bezeichnet.

Es ist leicht ersichtlich, dass im Fahrbetrieb unter allen Umständen verhindert werden muss, dass gleichzeitig mehr als ein Gang eingelegt werden kann, da dieses ein Blockieren des Getriebes zur Folge hätte und dies neben der Gefahr einer Zerstörung von Fahrzeugkomponenten auch zu für den Fahrer nicht beherrschbaren Fahrzuständen führen würde. Ein solches nachteiliges Getriebeverhalten kann durch eine mechanische Vorrichtung verhindert werden, durch die nur jeweils genau eine Schaltstange aus einer Neutralstellung bewegt werden kann, während alle weiteren Schaltstangen in ihrer Neutralstellung gehalten werden.

Aus der DE 41 18 931 A1 der Anmelderin ist ein Handschaltgetriebe bekannt, welches mehrere Synchroneinheiten umfasst, die durch Schaltschwingen bzw. durch auf Schaltstangen angeordneten Schaltgabeln betätigt werden. Dabei sind Verriegelungselemente vorgesehen, die verhindern, dass bei einer erfolgten Auslenkung einer Schaltschwinge oder Schaltstange aus deren Neutralstellung die anderen Schaltschwingen oder Schaltstangen betätigbar sind. Hierfür weisen koaxial nahe beieinander angeordnete Schaltstangen jeweils Einbuchtungen auf, zwischen denen eine Sperrkugel oder eine Sperrplatte verschieblich so angeordnet ist, dass jeweils eine der Schaltstangen aus ihrer Neutralstellung bewegt werden kann. Hierdurch wird die Sperrkugel oder Sperrplatte jeweils so in Richtung auf die andere Schaltstange verschoben, dass diese andere Schaltstange durch die Sperrkugel oder Sperrplatte in ihrer Neutralstellung gehalten wird.

Die DE 199 09 124 A1 offenbart eine Verriegelungsvorrichtung für ein Fahrzeuggetriebe, welches zwei parallele und benachbarte Schaltstangen aufweist, die jeweils eine Einbuchtung in Form einer Verriegelungsnut tragen, wobei zwischen den Schaltstangen eine Verriegelungskugel angeordnet ist. Die Funktionsweise ähnelt in Bezug auf die Verriegelung der oben beschriebenen Wirkungsweise der Verriegelungsvorrichtung gemäß der DE 41 18 931 A1. Zusätzlich ist für jede Schaltstange eine Rastkugel vorgesehen, die durch eine Feder in Richtung auf die jeweils zugeordnete Schaltstange vorgespannt wird. Die Rastkugel kann jeweils in eine von mehreren Nuten einrasten und damit eine unbeabsichtigte Verschiebung der Schaltstangen bis zu einer Grenzkraft verhindern, die durch die Vorspannung der Feder, den Kugeldurchmesser und die Form der Nut bestimmt wird.

Eine Verbesserung einer solchen Vorrichtung ist in Bezug auf Doppelkupplungsgetriebe in der unveröffentlichten DE 10 2004 036 498 der Anmelderin beschrieben. Hier werden parallel verlaufende Schaltstangen gegeneinander verriegelt, indem ein durch Federkraft vorgespannter Verriegelungsbolzen in einer Neutralstellung der Schaltstangen jeweils mit einem Ende in eine Ausnehmung der Schaltstangen gleitend einrastet.

Der Verriegelungsbolzen ist zweigeteilt und besteht demnach aus zwei Verriegelungsteilbolzen, welche jeweils auf ihren den Schaltstangen zugewandten Enden ein Kontaktelement aufweisen. Das Kontaktelement ist so ausgeformt, dass es in eine Verriegelungsnut oder eine sonstige dafür vorgesehene Ausnehmung der zugeordneten Schaltstange eingreifen kann, und bei einer axialen Verschiebung der Schaltstange aus dieser Verriegelungsnut oder sonstigen dafür vorgesehenen Ausnehmung unter axialer Verschiebung herausgleiten kann. Die beiden Verriegelungsteilbolzen sind koaxial angeordnet und werden durch ein Federelement axial in der Art vorgespannt, dass die beiden Kontaktelemente in Richtung auf die Schaltstangen vorgespannt sind.

Wesentlich ist nun, dass die Verriegelungsteilbolzen so gestaltet sind, dass sich in einer Stellung, in der die Kontaktelemente beider Verriegelungsteilbolzen in korrespondierende, der Neutralstellung zugeordnete Vertiefungen der Schaltstangen eingreifen, zwischen ihnen ein Freiraum ergibt, welcher so groß ist, dass er die axiale Bewegung genau einer der Schaltstangen und damit eine axiale Bewegung des zugeordneten Verriegelungsteilbolzens in Richtung auf den jeweils anderen Verriegelungsteilbolzen ermöglicht. Eine Verschiebung einer beliebigen der beiden Schaltstangen bewirkt ein Herausgleiten des jeweiligen Kontaktelementes aus der korrespondierenden Vertiefung der jeweiligen Schaltstange und damit eine axiale Bewegung des Teilverriegelungsbolzens in Richtung auf den jeweils anderen Teilverriegelungsbolzen. Der Freiraum ist jedoch so klein bemessen, dass eine axiale Bewegung der jeweils anderen Schaltstange aus ihrer Neutralstellung zuverlässig verhindert wird, wenn bereits eine der Schaltstangen aus ihrer Neutralposition herausbewegt wurde.

Durch diese vorteilhafte Ausgestaltung wird eine Integration der beiden Funktionen der gegenseitigen Verriegelung der Schaltstangen und der Bereitstellung einer Rastwirkung für definierte axiale Positionen der Schaltstangen erreicht. Zudem ist durch die Vorspannung der beiden Verriegelungsteilbolzen durch das Federelement ein bei den vorstehend genannten Lösungen mögliches Vibrieren des Verriegelungselementes und eine damit verbundene Geräuschentwicklung ausgeschlossen.

So genannte Mehrfachkupplungsgetriebe und insbesondere Doppelkupplungsgetriebe, von denen die DE 10 2004 036 498 der Anmelderin ausgeht, bilden dabei einen Sonderfall unter den Getrieben, auf den im Folgenden näher eingegangen wird:

Ein Doppelkupplungsgetriebe besteht im Wesentlichen aus zwei Strängen bzw. Teilgetrieben und zwei Lastschaltkupplungen, die jeweils einem Teilgetriebe zugeordnet sind. Im Fahrbetrieb mit eingelegtem Gang ist dabei jeweils eine Lastschaltkupplung geschlossen, wobei der eingelegte Gang des zugeordneten Teilgetriebes den Momentenfluss vom Antriebsmotor auf die Abtriebswelle des Getriebes und zum Beispiel an die angetriebene Fahrzeugachse bewirkt. Die jeweils andere Lastschaltkupplung ist geöffnet, womit das zugehörige Teilgetriebe nicht am Momentenfluss zwischen Antriebsmotor und angetriebener Fahrzeugachse beteiligt ist. Da die Fahrgänge abwechselnd auf die beiden Teilgetriebe verteilt sind, ergibt sich so die Möglichkeit, im jeweils nicht im Momentenfluss befindlichen Teilgetriebe einen Gangwechsel in die darüber oder darunter liegende Gangstufe vorzunehmen, und anschließend durch Öffnen der bisher geschlossenen Lastschaltkupplung und gleichzeitiges Schießen der bisher offenen Lastschaltkupplung eine Umschaltung des Momentenflusses zu bewirken und den bereits eingelegten Gang einzukuppeln. Auf diese Weise ist ein Gangwechsel ohne Zugkraftunterbrechung möglich. Bei dieser besonderen Getriebebauart ist es daher nicht nur möglich sondern prinzipbedingt geradezu erwünscht, dass zwei unterschiedliche Gänge gleichzeitig einlegbar sind, wobei in jedem Teilgetriebe wiederum jeweils höchstens genau ein Gang eingelegt sein darf.

Eine Ausnahme hierzu ist dann erwünscht, wenn in einem Doppelkupplungsgetriebe auf gesonderte Parksperrmittel Kosten- und Bauraum sparend verzichtet und eine Parksperrfunktion durch das gleichzeitige Einlegen von zwei Gängen in einem der beiden Teilgetriebe realisiert werden soll, wie weiter unten noch ausgeführt wird.

Das Prinzip des Doppelkupplungsgetriebes lässt sich selbstverständlich auf beliebige Mehrfachkupplungsgetriebe erweitern, welche an Stelle von zwei Teilgetrieben mit zugeordneten Lastschaltkupplungen eine Mehrzahl von N Teilgetrieben mit zugeordneten Lastschaltkupplungen aufweisen.

Im Rahmen dieser Druckschrift soll ein Mehrfachkupplungsgetriebe oder Doppelkupplungsgetriebe insoweit als eine Mehrzahl einzelner Getriebe bzw. Teilgetriebe aufgefasst werden, wobei für jedes Teilgetriebe gilt, dass im Fahrbetrieb ein gleichzeitiges Einlegen mehrerer Fahrgänge unbedingt zu vermeiden ist, während dieser Zustand bei stehendem Antriebsmotor und Fahrzeug zur Realisierung einer Park- oder Wegrollsperre durchaus erwünscht sein kann. Der Betriff Getriebe meint im Folgenden daher - soweit nicht ausdrücklich anders definiert - im Fall von Mehrfachkupplungsgetrieben jeweils ein Teilgetriebe desselben.

Obwohl eine gleichzeitig Aktivierung zweier Gänge in einem Getriebe im normalen Fahrbetrieb unbedingt zu vermeiden ist, kann dieser Zustand bei stehendem Antriebsmotor und stehender Abtriebswelle des Getriebes durchaus vorteilhaft sein, da sich durch die gleichzeitige Aktivierung zweier Gänge mit unterschiedlicher Übersetzungsverhältnis im gleichen Teilgetriebe eine wirkungsvolle Park- oder Wegrollsperre verwirklichen lässt. Die gleichzeitige Aktivierung zweier Gänge im Fahrbetrieb muss jedoch durch eine Verriegelungseinrichtung wirksam verhindert werden, wobei in Anbetracht der möglichen Folgen einer Fehlfunktion extreme Anforderungen an die Fehlersicherheit und Zuverlässigkeit einer solchen Verriegelungseinheit zu stellen sind. Hierbei sind einfache Lösungen, die auf geschickter Anordnung weniger mechanischer Teile beruhen, in Bezug auf Kosten und Ausfallsicherheit prinzipiell aufwendigen elektromechanischen oder elektrohydraulischen Lösungen vorzuziehen. Die vorliegende Erfindung stellt eine solche mechanisch einfache und daher besonders zuverlässige sowie kostengünstige Lösung für dieses Problem vor.

Vor diesem Hintergrund liegt der Erfindung die Aufgabe zugrunde, eine Vorrichtung zur aufhebbaren Verriegelung einer Schaltelementvorrichtung für ein Getriebe vorzustellen, die sich durch mechanische Einfachheit und zumindest weitgehende Wartungsfreiheit auszeichnet sowie ein gleichzeitiges Einlegen mehrerer Gangstufen im Fahrbetrieb sicher verhindert, während das gleichzeitige Einlegen mehrerer Gangstufen zur Realisierung einer Park- oder Wegrollsperre ermöglicht wird.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass eine derartige Verriegelungsvorrichtung aus wenigen und einfachen mechanischen Elementen aufgebaut sein kann und nach Möglichkeit direkt auf die Schaltelemente wirken sollte, da dies tendenziell die Ausfallsicherheit erhöht.

Eine Lösung der Problemstellung, die für die Verrastung und die Verriegelung der Schaltelemente sowie für die Aufhebung der Verriegelung jeweils unterschiedliche Mechanismen auf der Basis von Sensoren, Steuergeräten und Aktuatoren vorsieht, mag im Zuge der fortschreitenden Integration derartiger Systeme zwar nahe liegend sein, erfordert jedoch einen erheblichen Aufwand und kann die geforderte Ausfallsicherheit nur durch aufwendige und kostspielige Redundanz erreichen.

Auf Grundlage der in der unveröffentlichten DE 10 2004 036 498 vorgestellten Einrichtung ist es auf überraschend einfache Weise gelungen, nicht nur die Funktionen der Verrastung und der Verriegelung zu integrieren, sondern die Funktion der Verriegelung bei minimalem baulichem Aufwand zuschaltbar und abschaltbar zu gestalten.

Demnach geht die Erfindung aus von einer Vorrichtung zur aufhebbaren Verriegelung einer Schaltvorrichtung für ein Getriebe mit mehreren diskret schaltbaren Gangstufen, welche durch eine Mehrzahl von Schaltelementen aktivierbar sind, die jeweils zumindest eine Neutralstellung aufweisen, in denen keine der dem Schaltelement zugeordneten Gangstufen aktiviert ist, und die zumindest eine Aktivstellung aufweisen, in der genau eine der dem Schaltelement zugeordneten Gangstufen aktiviert ist.

Eine solche gattungsgemäße Vorrichtung ist beispielsweise bei Getrieben gegeben, welche über zumindest zwei Schaltelemente, z.B. in Form von Schaltstangen, verfügen und die jeweils zumindest eine Neutralstellung aufweisen, in der durch die Schaltstange kein Gang aktiviert ist, also keine wesentliche Momentübertragung von der Getriebeeingangswelle zur Getriebeausgangswelle bewirkt wird. Sind beide Schaltstangen in dieser Neutralposition, befindet sich das Getriebe insgesamt in der Neutralstellung. Befindet sich ein Schaltelement nicht in einer Neutralposition, so wird durch die Position des Schaltelementes ein aktiver Gang definiert. Um ein unbeabsichtigtes Wandern des Schaltelementes zu verhindern, können dabei Raststellungen vorgesehen sein, welche jeweils einem aktiven Gang entsprechen. Es ist dabei möglich, dass ein Schaltelement mehrere Positionen bzw. Raststufen für aktive Gänge aufweist. Beispielsweise kann ein erstes Schaltelement eine Neutralstellung und zwei Raststellungen für aktive Gänge aufweisen, es sind jedoch auch mehrere Raststellungen für aktive Gänge und für Neutralstellungen möglich. Selbstverständlich ist es auch möglich, an Stelle von Schaltstangen mit axialer Schaltbewegung andere Schaltelemente vorzusehen, welche beispielsweise durch Rotation betätigbar sind.

Zur Lösung der gestellten Aufgabe ist zumindest ein Verriegelungselement vorgesehen, welches aus zwei koaxial zueinander angeordneten Verrieglungsteilelementen besteht. Weiter ist ein Federelement vorgesehen, durch welches die einander zugewandten Enden der Verriegelungsteilelemente in der Art vorgespannt sind, dass sie das Bestreben haben, sich von einander zu entfernen. Dies führt zu einer veränderlichen Gesamtlänge des Verriegelungselementes.

Zudem ist durch diese Vorrichtung sichergestellt, dass die äußeren Enden der Teilverriegelungselemente durch die Federkraft stets in Kontakt mit den Schaltelementen stehen und auf diese Weise beispielsweise Vibrationsgeräusche zuverlässig vermieden werden können. Noch wichtiger ist in diesem Zusammenhang jedoch, dass durch das Federelement ein Anpressdruck der Enden der Verriegelungsteilelemente in Richtung der Schaltelemente aufgebracht wird, der in Verbindung mit einer Vertiefung im Schaltelement für eine Rastwirkung sorgt und so ein unbeabsichtigtes Verschieben und eine ungenaue Positionierung des Schaltelementes verhindert.

Es ist weiter vorgesehen, dass die den Schaltelementen zugewandten Enden der Verriegelungsteilelemente jeweils ein Kontaktelement aufweisen, welches mit zumindest einer Vertiefung des zugeordneten Schaltelementes derart zusammenwirken kann, dass es bei einer Bewegung des Schaltelementes aus dieser Vertiefung herausgleiten kann, wobei es zu einer zumindest im Wesentlichen axialen Bewegung des Verriegelungsteilelementes entgegen der Federwirkung des Federelementes kommt.

Das Kontaktelement kann dabei ein separates Element sein oder integraler Bestandteil des Verriegelungsteilelementes. Wichtig ist hier lediglich, dass die Form des Kontaktelementes und die Form der als Raststellungen fungierenden Vertiefungen so auf einander abgestimmt sind, dass bei einer Bewegung des Schaltelementes das Kontaktelement axial aus der Vertiefung bewegt wird. Durch eine geeignete Wahl der Profile des Kontaktelementes und der Vertiefungen sowie gegebenenfalls durch eine geeignete Wahl der Materialeigenschaften lässt sich in Verbindung mit einer gegebenen Federcharakteristik die Stärke des Rasteffektes bestimmen.

Wichtig ist auch, dass der freie Abstand zwischen den Verriegelungsteilgliedern so bemessen ist, dass ein gleichzeitiges Herausbewegen beider Kontaktelemente des zweiteiligen Verriegelungselementes aus den Neutralpositionen zugeordneten Vertiefungen ausgeschlossen ist. Gleichzeitiges Herausbewegen soll hierbei auch das Herausbewegen eines der Kontaktelemente aus einer Neutralstellung umfassen, während das andere Kontaktelement bereits die Neutralstellung verlassen hat. Es kommt hier also auf die Gleichzeitigkeit des Zustandes und nicht des Prozesses des Herausbewegens an.

Der freie Abstand bezeichnet dabei die Strecke, um welche die Verriegelungsteilglieder ausgehend von deren momentaner Position aufeinander zu bewegt werden können, bis sie auf einen starren mechanischen Widerstand stoßen. Dieser starre mechanische Widerstand kann beispielsweise durch einen Blocksatz des zusammengedrückten Federelementes gebildet sein, der eine weitere Bewegung der Verriegelungsteilelemente aufeinander zu verhindert. Er kann aber beispielsweise auch durch ein aneinander stoßen von starren Teilen der Verriegelungsteilelemente oder durch Anstoßen der Verriegelungsteilelemente an ein anderes Element gebildet werden.

Durch eine geschickte Wahl der geometrischen Verhältnisse lässt sich erreichen, dass ein Schaltelement nur dann aus seiner Neutralstellung herausbewegt werden kann, wenn sich das jeweils andere Schaltelement in einer Neutralstellung befindet. Wird eines der Schaltelemente aus der Neutralstellung herausbewegt, so wird dadurch das entsprechende Kontaktelement aus einer der Neutralstellung zugeordneten Vertiefung, beispielsweise einer Nut, herausbewegt, wodurch das Verriegelungsteilelement entgegen der Federkraft in Richtung auf das andere Verriegelungsteilelement bewegt wird und sich der freie Abstand zwischen den beiden Verriegelungsteilelementen entsprechend verringert.

Der in diesem Zustand verbleibende freie Abstand muss nun so bemessen sein, dass eine Verschiebung des anderen Verstellelementes aus der Neutralstellung heraus nicht möglich ist, da das Verriegelungsteilelement auf einen starren mechanischen Widerstand stößt, bevor es die der Neutralstellung zugeordnete Vertiefung vollständig verlassen hat.

Zudem ist es möglich und auch sinnvoll, dass die Schaltelemente Vertiefungen geringerer Tiefe als Rastpositionen für die einzelnen Gangstufen aufweisen. Diese müssen so bemessen sein, dass auch bei Einrastung eines Kontaktelementes an der tiefsten Stelle einer solchen Vertiefung der freie Abstand zwischen den Verriegelungsteilelementen geringer ist, als der zum Verlassen der Neutralposition des jeweils anderen Schaltelementes benötigte freie Abstand.

Der Vollständigkeit halber sei erwähnt, dass es selbstverständlich auch möglich ist, an Stelle des Federelementes, welches die Verriegelungsteilelemente auseinander drückt, eine Zugfeder oder ein äquivalentes Federelement vorzusehen und die Verriegelungsteilelemente so auszubilden, dass die Kontaktelemente um die Schaltelemente herum greifen. In diesem Fall ist dann der freie Raum in der Art abzugrenzen, dass seine maximale Ausdehnung durch einen Anschlag begrenzt wird. Eine derartige Abwandlung stellt lediglich eine äquivalente Vorrichtung dar und fällt daher mit in den beanspruchten Schutzumfang.

Erfindungsgemäß ist der freie Abstand zwischen den Verriegelungsteilelementen durch die Stellung eines Verriegelungsaufhebungselementes veränderbar, welches zumindest eine Verriegelungsstellung und eine Entriegelungsstellung einnehmen kann, wobei der freie Abstand in der Verriegelungsstellung so bemessen ist, dass ein gleichzeitiges Herausbewegen beider Kontaktelemente aus den Vertiefungen der Neutralpositionen der jeweiligen zugeordneten Schaltelemente nicht möglich ist, und der freie Abstand in der Entriegelungsstellung so bemessen ist, dass ein gleichzeitiges Herausbewegen beider Kontaktelemente aus den Vertiefungen der Neutralpositionen der jeweiligen zugeordneten Schaltelemente möglich ist.

Durch diese in Kenntnis der Erfindung überraschend einfache Maßnahme wird es möglich, beim vorliegen bestimmter Bedingungen, wie z.B. abgeschaltetem und stehendem Antriebsmotor sowie stehendem Fahrzeug, die gegenseitige Verriegelung der Schaltelemente aufzuheben, wodurch die gleichzeitige Aktivierung zweier Gangstufen möglich wird. Eine solche Aktivierung führt zu einer Blockierung des Getriebes und somit zu einem zuverlässigen Schutz gegen ein unbeabsichtigtes Wegrollen eines abgestellten Fahrzeugs. Weitere Anwendungen etwa im Bereich der Wegfahrsperren sind natürlich ebenfalls möglich.

Es ist dabei zunächst unerheblich, wie das Verriegelungsaufhebungselement aufgebaut ist oder angesteuert wird, solange es die beschriebenen Zustände einnehmen kann. Drei Ausbildungen haben sich jedoch als besonders einfach und wirkungsvoll erwiesen und werden im Folgenden beschrieben:

Wenn das Verriegelungsaufhebungselement durch eine zumindest im Wesentlichen lineare Bewegung zwischen seiner Verriegelungsstellung und seiner Entriegelungsstellung bewegt werden kann, ermöglicht dies eine besonders einfache Konstruktion nach Art eines Schiebers, der in den freien Abstand zwischen den Verriegelungsteilelementen eingeführt werden kann und diesen somit um seine wirksame Dicke verringert. Hierfür können an den bolzenartigen Verriegelungsteilelementen beispielsweise Vorsprünge oder Absätze vorgesehen sein, die mit korrespondierenden Flächen des Schiebers zusammenwirken. Ein wesentlicher Vorteil ist hierbei, dass sich eine lineare Bewegung besonders einfach zum Beispiel mittels eines hydraulischen oder pneumatischen Aktuators nach Art eines Hydraulikzylinders realisieren lässt.

Wenn das Verriegelungsaufhebungselement durch eine zumindest im Wesentlichen rotatorische Bewegung zwischen seiner Verriegelungsstellung und seiner Entriegelungsstellung bewegt werden kann, ist dies in vielen Fällen in Hinblick auf den benötigten Bauraum vorteilhaft und ermöglicht bei entsprechender geometrischer Auslegung zudem eine gleichzeitige Verriegelung bzw. Entriegelung mehrerer Verriegelungsbolzen durch die Rotation nur eines Verriegelungsaufhebungselementes. Dabei kann beispielsweise eine Scheibe in einen Bereich des freien Abstandes zwischen den Verriegelungsteilelementen eingeschwenkt werden und etwa durch Ausnehmungen in Form einer Lochscheibe oder durch unterschiedliche Materialdicken der mit den Verriegelungsteilelementen zusammenwirkenden Wirkflächen den genannten freien Abstand beeinflussen.

Wenn eine Bewegung des Verriegelungsaufhebungselementes eine rotatorische Verstellung zumindest eines Verriegelungsteilelementes bewirken kann, welche eine Verstellung zwischen einer Verriegelungsstellung und einer Entriegelungsstellung zur Folge hat, so ergeben sich besonders vorteilhafte Möglichkeiten der räumlichen Gestaltung. Unabhängig davon, ob das Verriegelungsaufhebungselement in einer linearen oder einer rotatorischen Bahn beweglich ist oder beispielsweise nach Art eines Zahnriemens ausgebildet ist, kann die gewünschte Verstellung des genannten freien Raumes durch eine Verdrehung zumindest eines Teilverriegelungselementes dadurch erfolgen, dass beispielsweise die einander zugewandten Enden der Teilverriegelungselemente mit zumindest einer Stufe oder Rampe ausgebildet sind.

Eine weitere vorteilhafte Weiterbildung der erfindungsgemäßen Vorrichtung sieht vor, dass das Verriegelungsaufhebungselement oder dessen Anlenkung so beschaffen ist, dass es im Fehlerfall selbsttätig seine Verriegelungsstellung einnimmt. Dies verbessert die Sicherheit des Gesamtsystems im Falle einer Fehlfunktion und kann im einfachsten Fall durch eine Feder bewerkstelligt werden, die das Verriegelungsaufhebungselement in Richtung der gewünschten Lage vorspannt. Es sind natürlich auch komplexere Lösungen denkbar, die beispielsweise zusätzlich eine Entkoppelung des Verriegelungsaufhebungselementes von seiner Anlenkung oder Ähnliches vorsehen.

Eine vorteilhafte Anwendung ergibt sich insbesondere auch dann, wenn das Getriebe ein Mehrfachkupplungsgetriebe ist, wobei das Verriegelungselement so angeordnet ist, dass es zumindest auf zwei Schaltelemente desselben Teilgetriebes einwirken kann, weil nur so die gleichzeitige Aktivierung zweier Gänge des selben Getriebes im Sinne einer Blockierung des Getriebes sichergestellt ist. Dabei ist es natürlich sinnvoll, wenn mehrere und bevorzugt alle Teilgetriebe mit einer derartigen Vorrichtung versehen sind. Zumindest sollte aber sichergestellt sein, dass bei einer Blockierung nur eines Teilgetriebes zum Zweck der Realisierung einer Wegrollsperre die entsprechende Lastschaltkupplung geschlossen ist, da die Blockierung des Teilgetriebes andernfalls nicht die gewünschte Wirkung hat.

Da im Bereich der Mehrfachkupplungsgetriebe die Bauform als Doppelkupplungsgetriebe vorherrscht, ist es auch im Rahmen dieser Erfindung sinnvoll, wenn das Mehrfachkupplungsgetriebe als ein Doppelkupplungsgetriebe mit zwei Teilgetrieben ausgebildet ist. Auf diese Weise kann der bauliche Aufwand für eine erfindungsgemäße Vorrichtung gering gehalten und gleichzeitig alle Teilgetriebe mit einer erfindungsgemäßen Verriegelungsvorrichtung ausgerüstet werden.

Wenn das Federelement eine Spiralfeder umfasst, ermöglicht dies eine kostengünstige Konstruktion. Bei Bedarf kann die Spiralfeder zudem so ausgelegt werden, dass sie bis auf Blocksatz zusammengedrückt werden kann und auf diese Weise als mechanischer Anschlag zur Begrenzung des freien Raumes zwischen den Verriegelungsteilelementen dient.

Wenn das Federelement zumindest eine Tellerfeder umfasst, sind Federn mit sehr hohen Federkonstanten bei relativ geringen Federwegen sehr kostengünstig realisierbar. Da die Rastwirkung unter anderem von der Federkonstanten bzw. der von der Feder eingebrachten Kraft abhängig ist, kann eine hohe Federkonstante zur Erzielung einer guten Rastwirkung erwünscht sein. Zudem ist es durch die Reihenschaltung mehrerer Tellerfedern mit unterschiedlichen Federkonstanten möglich, nahezu beliebige Federkennlinien zu realisieren und so beispielsweise unterschiedlich starke Rastwirkungen zu erzielen.

Schließlich ergibt sich ein besonders einfacher Aufbau der erfindungsgemäßen Vorrichtung, wenn das Schaltelement eine Schaltstange ist, welche zwischen zumindest zwei Stellungen axial verschieblich gelagert ist. Einerseits sind Schaltstangen häufig besonders zur Ansteuerung der Getriebe geeignet und bieten in Hinblick auf deren Lagerung und Abdichtung Vorteile, da zumeist einfache Gleitlager und Gummibalgen oder auch nur eng tolerierte Durchführungen zur Erfüllung der gewünschten Funktionen genügen, andererseits ist bei diesen die Ausbildung von Rastnuten oder sonstigen Vertiefungen für die verschiedenen Raststellungen besonders einfach und genau realisierbar.

Die Erfindung lässt sich anhand eines Ausführungsbeispiels weiter erläutern. Dazu ist der Beschreibung eine Zeichnung mit zwei Figuren beigefügt. In dieser zeigt
- Fig. 1: eine konkrete Ausgestaltung einer erfindungsgemäßen Vorrichtung, und
- Fig. 2: eine Schnittansicht der Vorrichtung gemäß Fig. 1 entlang der Linie A-A.

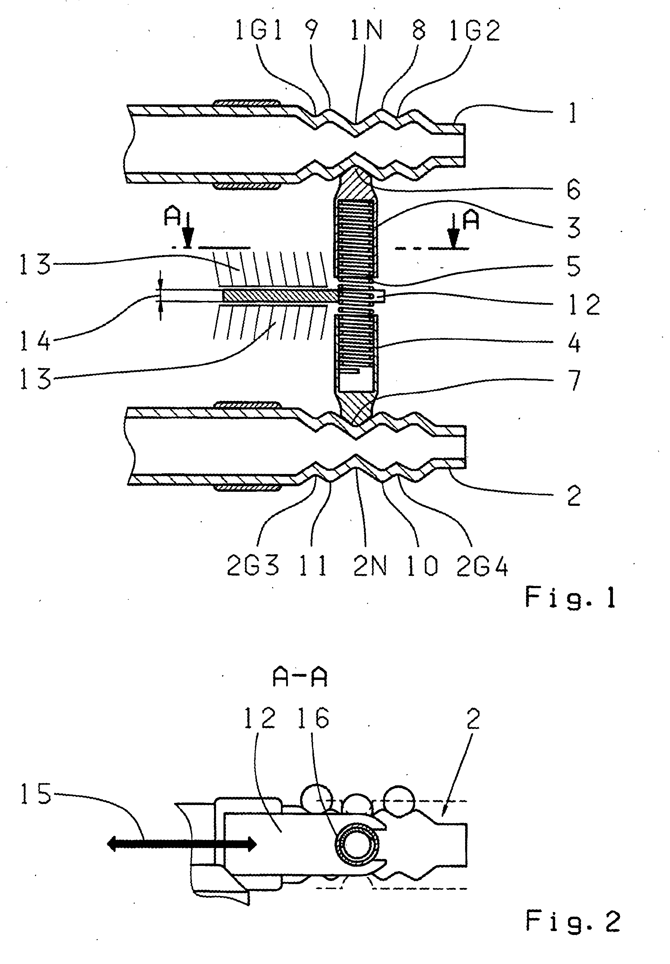

In Fig. 1 ist ein erstes Schaltelement 1 und ein zweites Schaltelement 2 dargestellt, welche hier die Form von Schaltstangen aufweisen, aber grundsätzlich auch anders geformt und/oder gelagert sein können. Die Schaltstangen 1 und 2 dienen der Ansteuerung eines nicht gezeigten Getriebes oder auch eines Teilgetriebes eines Doppelkupplungsgetriebes mit mehreren, in diesem Beispiel vier separaten Gängen.

Jede dieser Schaltstangen 1 und 2 weisen jeweils drei Vertiefungen 1 G1, 1 N und 1 G2 bzw. 2G3, 2N und 2G4 auf, in diesem Beispiel in Form von ringförmigen Rastnuten.

Weiter ist ein Verriegelungselement vorgesehen, welches sich aus einem ersten Verriegelungsteilelement 3 und einem zweiten Verriegelungsteilelement 4 zusammensetzt, welche koaxial zueinander angeordnet sind und durch ein Federelement 5, das in diesem Beispiel eine Spiralfeder ist, in der Weise federbelastet werden, dass diese in Richtung der ihnen zugeordneten Schaltstangen 1 bzw. 2 vorgespannt sind.

An ihren äußeren Enden weisen die Verriegelungsteilelemente 3 und 4 jeweils ein Kontaktelement 6 beziehungsweise 7 auf, die in diesem Fall einstückig an die Verriegelungsteilelemente 3, 4 angeformt sind. Die Kontaktelemente 6 und 7 werden durch die Spiralfeder 5 in Richtung zu den Schaltstangen 1 und 2 gedrückt, wodurch sich in Verbindung mit den Rastnuten 1 G1, 1 N und 1 G2 bzw. 2G3, 2N und 2G4 Raststellungen der Schaltstangen ergeben. In der gezeichneten Stellung ist das Kontaktelement 6 in die Rastnut für die Neutralstellung der ersten Schaltstange 1 N eingerastet, während das Kontaktelement 7 in die Rastnut für die Neutralstellung der zweiten Schaltstange 2N eingerastet ist.

Es ist nun möglich, durch eine nicht gezeigte Betätigungseinrichtung eine der beiden Schaltstangen 1 oder 2 axial zu verschieben und das Getriebe dadurch von der Neutralstellung in einen Gang zu schalten. Durch eine axiale Verschiebung beispielsweise der ersten Schaltstange 1 nach links werden das Kontaktelement 6 und das Verriegelungsteilelement 3 in Richtung auf das andere Verriegelungsteilelement 4 bewegt, bis der höchste Punkt 8 der Schaltstange 1 erreicht ist. Anschließend gleitet bei weiterer axialer Verschiebung der Schaltstange 1 das Kontaktelement 6 in die Vertiefung 1 G2, wobei sich die Spiralfeder 5 teilweise entspannt und sich das Kontaktelement 6 sowie das Verriegelungsteilelement 3 wieder in Richtung auf die in der Fig. 1 gezeigte Lage bewegen, ohne jedoch die gezeigte Ausgangslage wieder zu erreichen.

Auf diese Weise kann sowohl eine unbeabsichtigte Verstellung der Schaltstange 1 als auch eine ungenaue Positionierung derselben verhindert werden. Es ist dabei zu beachten, dass die Rastnuten 1 N und 2N für die jeweilige Neutralstellung tiefer sind als die Rastnuten 1 G1, 1 G2, 2G3 und 2G4, welche den unterschiedlichen Fahrgängen zugeordnet sind.

Der freie Abstand zwischen den Verriegelungsteilelementen 3 und 4, also der Abstand, um den sich die Verriegelungsteilelementen 3 und 4 ausgehend von einem momentanen Zustand auf einander zu bewegen können, bis diese auf einen starren mechanischen Widerstand stoßen, ist so bemessen, dass die höchsten Erhebungen 8 und 9 bzw. 10 und 11 zu beiden Seiten der Vertiefung 1 N bzw. 2N von den Geleitelementen 6 bzw. 7 nur dann überwunden werden können, wenn das jeweils andere Kontaktelement 6 bzw. 7 sich zu diesem Zeitpunkt in der Vertiefung 1 N bzw. 2N befindet.

Befindet sich beispielsweise das Kontaktelement 6 in der Vertiefung 1 G2, die weniger tief ist als die Vertiefung der Neutralstellung 1 N, so ist das Verriegelungsteilelement 3 im Verhältnis zur in der Fig. 1 dargestellten Lage axial in Richtung auf das zweite Verriegelungsteilelement 4 verschoben. Daraus folgt ein verringerter freier Abstand zwischen den Verriegelungsteilelementen 3 und 4. Dieser verringerte freie Abstand reicht nicht aus, um dem Kontaktelement 7 die Überwindung der Erhebungen 10 oder 11 zu ermöglichen, da das Verriegelungsteilelement 4 zuvor auf einen mechanisch starren Widerstand stößt.

Dieser mechanisch starre Widerstand kann beispielsweise durch ein Erreichen des Blocksatzzustandes des Federelementes 5 realisiert werden. Alternativ dazu können die einander zugewandten Enden der Verriegelungsteilelemente 3 und 4 so gestaltet sein, dass sie durch ein Aneinanderstoßen diesen mechanisch starren Widerstand bilden.

In einer bevorzugten Ausgestaltung der erfindungsgemäßen Vorrichtung wird dieser mechanisch starre Widerstand bzw. der freie Abstand jedoch durch ein Zusammenwirken der einander zugewandten Enden der Verriegelungsteilelemente 3 und 4 und einem Verriegelungsaufhebungselement 12 gebildet, welches in diesem Beispiel als Schieber 12 ausgebildet ist, der axial verschieblich in einer Führung 13 gelagert ist. In der in Fig. 1 gezeigten Stellung des Schiebers 12 ragt dieser in den freien Abstand zwischen den einander zugewandten Enden der Verriegelungsteilelemente 3 und 4 ein und verringert diesen um seine wirksame Dicke 14.

Fig. 2 stellt einen Schnitt durch Fig. 1 entlang der Linie A-A dar. In dieser Ansicht ist die Form des Schiebers 12 deutlich zu erkennen. Der Pfeil 15 deutet eine Bewegungsrichtung des Schiebers 12 an. Wird der Schieber 12 nach rechts verschoben, bis der Rand seiner Ausnehmung 16 an die Spiralfeder 5 stößt oder sich zumindest zwischen den einander zugewandten Enden der Verriegelungsteilelemente 3 und 4 befindet, so ist der freie Abstand um die wirksame Dicke 14 des Schiebers 12 verringert und ein Verlassen einer der Rastnuten 1 N oder 2N ist wie oben beschrieben nur möglich, wenn das jeweils andere Kontaktelement 6 oder 7 sich zu diesem Zeitpunkt in der jeweiligen zugeordneten Rastnut 1 N oder 2N befindet.

Durch eine axiale Verschiebung des Schiebers 12 nach links kann der freie Abstand im Verhältnis zum vorstehend beschriebenen Zustand um die wirksame Dicke 14 des Schiebers 12 vergrößert werden, wodurch ein Verlassen einer der Rastnuten 1 N oder 2N auch dann möglich ist, wenn das jeweils andere Kontaktelement 6 oder 7 sich zu diesem Zeitpunkt nicht in der jeweiligen zugeordneten Rastnut 1 N oder 2N befindet. Dies ermöglicht die gleichzeitige Aktivierung zweier Gänge des Getriebes oder im Falle eines Doppelkupplungsgetriebes desselben Teilgetriebes und damit die Blockierung des Getriebes. Auf diese Weise kann mit vergleichsweise einfachen mechanischen Mitteln eine Park- oder Wegrollsperre realisiert werden.

Gleichzeitig kann durch eine entsprechende Ansteuerung des Schiebers 12 auf einfache Weise sichergestellt werden, dass die Blockierung des Getriebes nicht während des normalen Fahrbetriebs auftreten kann.

Der Schieber 12 kann dabei durch beliebige geeignete Aktuatoren und auf Basis geeigneter Signale angesteuert werden. Eine einfache und sinnvolle Ausprägung besteht aus einem kleinen hydraulisch oder pneumatisch betätigbaren Zylinder, welcher bei stehendem Fahrzeug bei Abstellen des Motors für eine kurze Zeitspanne von beispielsweise einigen Sekunden oder Minuten so angesteuert wird, dass der Schieber 12 nach links bewegt wird und die Wegrollsperrenfunktion freigibt.

Sobald der Motor erneut gestartet wird, eine Bewegung der Räder oder eine Deaktivierung der Wegrollsperre festgestellt wird, wird die Hydraulik oder Pneumatik für den Zylinder so angesteuert, dass der Schieber 12 gemäß der Zeichnung nach rechts bewegt wird.

Alternativ und bevorzugt dazu kann der Aktuator auch in einen frei beweglichen Zustand gebracht werden, indem etwa Ventile zu einer Drucksenke geöffnet werden oder der Aktuator vom Schieber entkoppelt wird. In diesem Fall ist ein Federelement vorzusehen, welches den Schieber 12 selbsttätig nach rechts bewegt. Eine solche Vorrichtung bietet eine erhöhte Ausfallsicherheit und eignet sich beispielsweise für einen Notbetrieb, in welchem der Aktuator wirkungslos geschaltet wird.

### Bezugszeichen

- 1: erstes Schaltelement, erste Schaltstange
- 2: zweites Schaltelement, zweite Schaltstange
- 1 G1: Vertiefung des ersten Schaltelementes, Rastnut für Gang 1
- 1 N: Vertiefung des ersten Schaltelementes, Rastnut für Neutralstellung
- 1 G2: Vertiefung des ersten Schaltelementes, Rastnut für Gang 2
- 2G3: Vertiefung des zweiten Schaltelementes, Rastnut für Gang 3
- 2N: Vertiefung des zweiten Schaltelementes, Rastnut für Neutralstellung
- 2G4: Vertiefung des zweiten Schaltelementes, Rastnut für Gang 4
- 3: erstes Verriegelungsteilelement
- 4: zweites Verriegelungsteilelement
- 5: Federelement, Spiralfeder
- 6: Kontaktelement des ersten Verriegelungsteilelementes
- 7: Kontaktelement des zweiten Verriegelungsteilelementes
- 8: höchste Erhebung zwischen 1 N und 1 G2
- 9: höchste Erhebung zwischen 1 N und 1G1
- 10: höchste Erhebung zwischen 2N und 2G4
- 11: höchste Erhebung zwischen 2N und 2G3
- 12: Verriegelungsaufhebungselement, Schieber
- 13: Führung für Schieber 12
- 14: Wirksame Dicke des Schiebers 12
- 15: Bewegungsrichtung des Schiebers 12
- 16: Ausnehmung des Schiebers 12

## Patentansprüche

1. Vorrichtung zur aufhebbaren Verriegelung einer Schaltvorrichtung für ein Getriebe mit mehreren diskret schaltbaren Gangstufen, welche durch eine Mehrzahl von Schaltelementen (1, 2) aktivierbar sind, die jeweils zumindest eine Neutralstellung (1N, 2N) aufweisen, in denen keine der dem Schaltelement (1, 2) zugeordneten Gangstufen aktiviert ist, und die zumindest eine Aktivstellung (1G1, 1G2, 2G3, 2G4) aufweisen, in der genau eine der dem Schaltelement (1, 2) zugeordneten Gangstufen aktiviert ist, wobei zumindest ein Verriegelungselement mit zwei koaxial zueinander angeordneten Verriegelungsteilelementen (3, 4) vorgesehen ist, wobei ein Federelement (5) so angeordnet ist, dass es die Verriegelungsteilelemente (3, 4) voneinander weg drückt, wobei die den Schaltelementen (1, 2) zugewandten Enden der Verriegelungsteilelemente (3, 4) jeweils ein Kontaktelement (6, 7) aufweisen, weiches mit zumindest einer Vertiefung (1G1, 1N, 1G2, 2G3, 2N, 2G4) des zugeordneten Schaltelementes (1, 2) derart zusammenwirken kann, dass es bei einer Axialbewegung des Schaltelementes (1, 2) aus dieser Vertiefung heraus bewegbar ist, und wobei der freie Abstand zwischen den Verriegelungsteilelementen (3, 4) so bemessen ist, dass ein gleichzeitiges Herausbewegen beider Kontaktelemente (6, 7) aus den Neutralpositionen zugeordneten Vertiefungen (1N, 2N) im Fahrbetrieb verhindert wird, **dadurch gekennzeichnet, dass** der freie Abstand zwischen den Verriegelungsteilelementen (3, 4) durch die Stellung eines Verriegelungsaufhebungselementes (12) veränderbar ist, welches zumindest eine Verriegelungsstellung und eine Entriegelungsstellung einnehmen kann, wobei der freie Abstand in der Verriegelungsstellung so bemessen ist, dass ein gleichzeitiges Herausbewegen beider Kontaktelemente (6, 7) aus den Vertiefungen der Neutralpositionen (1N, 2N) der jeweiligen zugeordneten Schaltelemente (1, 2) nicht möglich ist, und der freie Abstand in der Entriegelungsstellung so bemessen ist, dass ein gleichzeitiges Herausbewegen beider Kontaktelemente (6, 7) aus den Vertiefungen der Neutralpositionen (1 N, 2N) der jeweiligen zugeordneten Schaltelemente (1, 2) möglich ist.

2. Vorrichtung nach Anspruch 1, **dadurch gekennzeichnet, dass** das Verriegelungsaufhebungselement (12) durch eine zumindest im Wesentlichen lineare Bewegung zwischen seiner Verriegelungsstellung und seiner Entriegelungsstellung bewegt werden kann.

3. Vorrichtung nach Anspruch 1, **dadurch gekennzeichnet, dass** das Verriegelungsaufhebungselement (12) durch eine zumindest im Wesentlichen rotatorische Bewegung zwischen seiner Verriegelungsstellung und seiner Entriegelungsstellung bewegt werden kann.

4. Vorrichtung nach zumindest einem der Ansprüche 1 bis 3, **dadurch gekennzeichnet, dass** eine Bewegung des Verriegelngsaufhebungselementes (12) eine rotatorische Verstellung zumindest eines Verriegelungsteilelementes (3, 4) bewirken kann, welche eine Verstellung zwischen einer Verriegelungsstellung und einer Entriegelungsstellung zur Folge hat.

5. Vorrichtung nach einem der Ansprüche 1 bis 4, **dadurch gekennzeichnet, dass** das Verriegelungsaufhebungselement (12) oder dessen Anlenkung so ausgebildet ist, dass es im Fehlerfall selbsttätig seine Verriegelungsstellung einnimmt.

6. Vorrichtung nach einem der Ansprüche 1 bis 4, **dadurch gekennzeichnet, dass** das Getriebe ein Mehrfachkupplungsgetriebe ist, wobei das Verriegelungsaufhebungselement so angeordnet ist, dass es zumindest auf zwei Schaltelemente (1, 2) eines Teilgetriebes einwirken kann.

7. Vorrichtung nach Anspruch 6, **dadurch gekennzeichnet, dass** das Mehrfachkupplungsgetriebe ein Doppelkupplungsgetriebe mit zwei Teilgetrieben ist.

8. Vorrichtung nach wenigstens einem der vorhergehenden Ansprüche, **dadurch gekennzeichnet, dass** das Federelement (5) eine Spiralfeder umfasst.

9. Vorrichtung nach wenigstens einem der vorhergehenden Ansprüche, **dadurch gekennzeichnet, dass** das Federelement (5) zumindest eine Tellerfeder umfasst.

10. Vorrichtung nach wenigstens einem der vorherigen Ansprüche, **dadurch gekennzeichnet, dass** das Schaltelement (1, 2) eine Schaltstange ist, welche zwischen zumindest zwei Stellungen axial verschieblich ist.

## Claims

1. A device for undoable locking of a shifting mechanism for a transmission with several discretely shifting gear steps, which can be activated by a number of shifting components (1, 2), each of which features at least one neutral position (1 N, 2N) in which none of the gear steps assigned to the shifting component (1, 2) is active, and at least one active position (1 G1,1 G2, 2G3, 2G4) in which exactly one of the gear steps assigned to the shifting component (1, 2) is active, with at least one locking element with two coaxially arranged partial locking elements (3, 4) being provided, with one spring element (5) being arranged in such a way that the partial locking elements (3, 4) are pressed apart, with each end of the partial locking elements (3, 4) facing the shifting components (1, 2) featuring a contact element (6, 7), which can act with at least one recess (1G1, IN, 1G2, 2G3, 2N, 2G4) of the assigned shifting component (1, 2) in such a way that when the shifting component (1, 2) performs an axial movement it can be moved out of this recess, and with the free distance between partial locking elements (3, 4) being such that simultaneous moving of both contact elements (6, 7) out of the recesses (IN, 2N) assigned to neutral positions is prevented during driving, **characterized in that** the free distance between the partial locking elements (3, 4) can be changed by the position of a locking release element (12) providing at least one locking position and one release position, with the free distance in the locking position being such that simultaneous movement of both contact elements (6, 7) out of the recesses of the neutral positions (1 N, 2N) of the assigned shifting components (1, 2) is not possible, and the free distance in the release position being such that simultaneous movement of both contact elements (6, 7) out of the recesses of the neutral positions (1N, 2N) of the assigned shifting components (1, 2) is possible.

2. A device according to claim 1, **characterized in that** the locking release element (12) can be moved between its locking position and its release position by a motion that is at least essentially linear.

3. A device according to claim 1, **characterized in that** the locking release element (12) can be moved between its locking position and its release position by a motion that is at least essentially rotatory.

4. A device according to at least one of the claims 1 thru 3, **characterized in that** a movement of the locking release element (12) can bring about rotatory travel of at least one partial locking element (3, 4), which results in travel between a locking position and a release position.

5. A device according to one of the claims 1 thru 4, **characterized in that** the locking release element (12) or its attachment is designed in such a way that its locking position will be automatically set in the event of a failure.

6. A device according to one of the claims 1 thru 4, **characterized in that** the transmission is a multiple-clutch transmission, with the locking release element being arranged in such a way that it can act on at least two shifting components (1, 2) of a partial transmission.

7. A device according to claim 6, **characterized in that** the multiple-clutch transmission is a dual-clutch transmission with two partial transmissions.

8. A device according to at least one of the preceding claims, **characterized in that** the spring element (5) comprises a spiral spring.

9. A device according to at least one of the preceding claims, **characterized in that** the spring element (5) comprises at least one disk spring.

10. A device according to at least one of the preceding claims, **characterized in that** the shifting component (1, 2) is a gearshift rod which is axially displaceable between at least two positions.

## Revendications

1. Dispositif de verrouillage, susceptible d'être supprimé, d'un dispositif de changement de vitesses pour une boîte de vitesses à plusieurs rapports pouvant être engagés individuellement et pouvant être activés à l'aide d'un grand nombre d'éléments de commande (1, 2), ceux-ci comportant respectivement au moins une position de point mort (1 N, 2N), dans lesquelles n'est activé aucun des rapports associés à l'élément de commande (1, 2), et qui comportent au moins une position active (1G1,1G2, 2G3, 2G4), dans laquelle est activé exactement un des rapports associés à l'élément de commande (1, 2), sachant qu'est prévu au moins un élément de verrouillage avec deux éléments partiels de verrouillage (3, 4) disposés coaxialement l'un par rapport à l'autre, sachant qu'un élément élastique (5) est disposé de manière à ce qu'il écarte les éléments partiels de verrouillage (3, 4) l'un par rapport à l'autre, sachant que les extrémités des éléments partiels de verrouillage (3, 4) orientées vers les éléments de commande (1, 2) comportent respectivement un élément de contact (6, 7), celui-ci étant pouvant coopérer avec au moins une encoche (1G1, 1N, 1G2, 2G3, 2N, 2G4) de l'élément de commande associé (1, 2) de manière à ce que, lors d'un mouvement axial de l'élément de commande (1, 2), l'élément de contact peut être dégagé de cette encoche, et sachant que l'espace libre entre les éléments partiels de verrouillage (3, 4) est dimensionné de manière à ce que pendant la marche est évité un dégagement simultané des deux éléments de contact (6, 7) des encoches (1 N, 2N) associées à des positions de point mort, **caractérisé en ce que** l'espace libre entre les éléments partiels de verrouillage (3, 4) peut être varié par la position d'un élément de suppression du verrouillage (12), celui-ci pouvant prendre au moins une position de verrouillage et une position de déverrouillage, sachant que l'espace libre dans la position de verrouillage est dimensionné de manière à ce qu'il n'est pas possible de dégager simultanément les deux éléments de contact (6, 7) des encoches des positions de point mort (1 N, 2N) des éléments de commande respectivement associés (1, 2), et **en ce que** l'espace libre dans la position de déverrouillage est dimensionné de manière à ce qu'il est possible de dégager simultanément les deux éléments de contact (6, 7) des encoches des positions de point mort (1N, 2N) des éléments de commande respectivement associés (1, 2).

2. Dispositif selon la revendication 1, **caractérisé en ce que** l'élément de suppression du verrouillage (12) peut être déplacé par un mouvement au moins essentiellement linéaire entre sa position de verrouillage et sa position de déverrouillage.

3. Dispositif selon la revendication 1, **caractérisé en ce que** l'élément de suppression du verrouillage (12) peut être déplacé par un mouvement au moins essentiellement rotatif entre sa position de verrouillage et sa position de déverrouillage.

4. Dispositif selon au moins une des revendications 1 à 3, **caractérisé en ce que** un mouvement de l'élément de suppression du verrouillage (12) peut provoquer un déplacement rotatif d'au moins un élément partiel de verrouillage (3, 4), ce déplacement pouvant entraîner un déplacement entre une position de verrouillage et une position de déverrouillage.

5. Dispositif selon une des revendications 1 à 4, **caractérisé en ce que** l'élément de suppression du verrouillage (12) ou son articulation sont réalisés de façon à ce que en cas d'anomalie ils prennent automatiquement leur position de verrouillage.

6. Dispositif selon une des revendications 1 à 4, **caractérisé en ce que** la boîte de vitesses est une transmission à plusieurs embrayages, sachant que l'élément de suppression du verrouillage est disposé de manière à ce qu'il peut agir au moins sur deux éléments de commande (1, 2) d'une demi-boîte.

7. Dispositif selon la revendication 6, **caractérisé en ce que** la boîte à plusieurs embrayages est une transmission à double embrayage avec deux demi-boîtes.

8. Dispositif selon au moins une des revendications précédentes, **caractérisé en ce que** l'élément élastique (5) comprend un ressort en spirale.

9. Dispositif selon au moins une des revendications précédentes, **caractérisé en ce que** l'élément élastique (5) comprend au moins un ressort Belleville.

10. Dispositif selon au moins une des revendications précédentes, **caractérisé en ce que** l'élément de commande (1, 2) est une tige de commande, celle-ci pouvant être déplacée axialement entre au moins deux positions.
